Europäisches Patentamt

European Patent Office

Office européen des brevets

(11) Veröffentlichungsnummer: **0 424 669 A2**

## (12) EUROPÄISCHE PATENTANMELDUNG

(21) Anmeldenummer: 90118089.3

(22) Anmeldetag: 20.09.90

(51) Int. Cl.⁵: **C01B 7/07**

(30) Priorität: 22.09.89 DE 3931552

(43) Veröffentlichungstag der Anmeldung:
02.05.91 Patentblatt 91/18

(84) Benannte Vertragsstaaten:
BE DE DK ES FR GB GR IT LU NL

(71) Anmelder: HOECHST AKTIENGESELLSCHAFT
Postfach 80 03 20
W-6230 Frankfurt am Main 80(DE)

(72) Erfinder: Strien, Dieter
Frankfurter Strasse 168
W-6233 Kelkheim/Taunus(DE)
Erfinder: Noichl, Harald, Dr.
Am Flachsland 52
W-6233 Kelkheim/Taunus(DE)
Erfinder: Sczech, Jürgen
Grosser Feldbergweb 17
W-6270 Idstein(DE)
Erfinder: Schott, Martin, Dr.
Königsteiner Strasse 7
W-6374 Steinbach(DE)
Erfinder: Klockner, Dieter, Dr.
Karlsbader Strasse 58
W-6056 Heusenstamm(DE)

(54) Verfahren zur Gewinnung reiner Salzsäure aus HC1-haltigen Rauchgasen.

(57) Die Erfindung betrifft ein Verfahren zur Gewinnung von reiner, etwa 18 bis 20 %iger Salzsäure aus einer verunreinigten, 1-17 %igen Salzsäure, die durch Waschen oder Quenchen von HCl-haltigem Rauchgas mit Wasser erhalten wurde. Dabei wird in einer ersten Stufe die verunreinigte Salzsäure durch Abdestillieren von Wasser in etwa 18 - 20 %ige Salzsäure überführt und diese in einer zweiten Stufe von den im Sumpf verbleibenden Verunreinigungen abdestilliert.

EP 0 424 669 A2

## VERFAHREN ZUR GEWINNUNG REINER SALZSÄURE AUS HCL-HALTIGEN RAUCHGASEN

Bei vielen Chlorierungsreaktionen treten Rückstände auf, die verbrannt werden müssen, so z.B. bei der Produktion von Vinylchlorid oder von chlorierten Kohlenwasserstoffen (CKW). Der Anteil an Chlor liegt manchmal bei diesen Rückständen bei mehr als 50 % des Gewichtes. Außerdem enthalten die Rückstände oft nur wenig oder keinen Wasserstoff, so daß die Bildung von Wasser bei der Verbrennung auf ein Minimum beschränkt ist. Hier ist es möglich, durch geeignete Verfahrensführung bei der Verbrennung HCl-Gas zu gewinnen. Ein solches Verfahren beschreibt z.B. die DE-OS 22 62 875, wo eine konzentrierte Salzsäure entsteht, die durch Desorption in HCl-Gas und azeotrope Salzsäure getrennt wird. Das geschilderte Verfahren zur Gewinnung von HCl-Gas ist aber nur dann anwendbar, wenn das zu verbrennende Material viel Chlor und wenig Wasserstoff enthält. Außerdem wird es sich im allgemeinen um kleinere Anlagen handeln, die nur eine beschränkte Menge an Rückständen aufzuarbeiten haben. Diese Anlagen sind in ihren Investitionskosten und in ihrem Personalaufwand ungünstiger als Großanlagen.

In der Praxis hat man es bei der Verbrennung von Sondermüll jedoch im allgemeinen mit Großanlagen zu tun, in denen sowohl chlorhaltige als auch chlorfreie Rückstände unterschiedlicher Zusammensetzung in wechselnder Menge durchgesetzt werden. Dadurch hat das Rauchgas wechselnde Anteile an HCl und $H_2O$. Außerdem sind häufig auch noch andere Verbindungen, z.B. $SO_2$, Quecksilber-, Cadmium- und Arsenverbindungen vorhanden, manchmal auch die Halogene Chlor, Brom und Jod. Die Reinigung der Rauchgase beginnt im allgemeinen mit der Abscheidung des Staubes durch Filter, insbesondere durch Elektrofilter. Um aus dem Rauchgas HCl und $SO_2$ getrennt auszuwaschen, ist ein zweistufiges Verfahren üblich, wie es z.B. G. Klinke in "Chemie-Anlagen und Verfahren", 1976, Nr. 8, S. 84-86 beschreibt. Dabei wird in der ersten Stufe das Rauchgas mit Wasser gewaschen, wobei der Chlorwasserstoff praktisch völlig entfernt wird, wenn man diese erste Stufe unterteilt in Haupt- und Nachwäsche (beide mit Wasser). Die so entstehende Salzsäure hat im allgemeinen einen relativ niedrigen Gehalt an HCl, der etwa 3 g HCl/kg Salzsäure bis über 100 g/kg betragen kann. Die Konzentration der azeotropen Salzsäure (202 g HCl/kg Salzsäure) wird jedoch in solchen Rückstandverbrennungsanlagen nicht erreicht. In der zweiten Stufe der Rauchgasreinigungsanlage wird dann mit Natronlauge das $SO_2$ ausgewaschen.

Die in der ersten Stufe anfallende Salzsäure ist in der Form, in der sie entsteht, nicht brauchbar. Zum einen enthält sie Verunreinigungen, die mit dem Wasser aus dem Rauchgas ausgewaschen worden sind, zum anderen ist es die relativ niedrige Konzentration der Salzsäure, die einer sinnvollen Verwertung im Wege steht.

Die Aufgabe bestand nunmehr darin, aus der verdünnten und verunreinigten Salzsäure, wie sie in der ersten Stufe einer Rauchgaswäsche entsteht, eine möglichst reine und technisch verwertbare, azeotrope oder fast azeotrope Salzsäure herzustellen. Die Rauchgase können aus der Verbrennung unterschiedlicher Materialien stammen. HCl-haltige Rauchgase entstehen z.B. in Hausmüllverbrennungsanlagen. Die Menge an HCl, die aus dem Rauchgas ausgewaschen werden muß, steht in Relation zum Chlorgehalt des Mülls. Bei ca. 0,7 % Chlor im Abfall ergeben sich etwa 5 kg HCl/t Müll. Bei der Verbrennung von Sondermüll unterschiedlicher Zusammensetzung, z.B. Rückständen aus verschiedenen Produktionsprozessen eines großen chemischen Werkes enthält das Rauchgas schwankende Mengen an HCl, die pro Tonne Abfall mehr als das 10fache des in einer Hausmüll-Verbrennung zu erwartenden Wertes betragen können. Im Durchschnitt beträgt der Chlorgehalt der Abfälle, die in einer solchen Rückstandverbrennungsanlage eines Chemiewerkes zu verarbeiten sind, häufig etwa 5 %. Für solche Fälle mit schwankendem, insgesamt aber relativ hohem Anfall an HCl wird ein Verfahren benötigt, das eine sichere Gewinnung des Wertstoffes Salzsäure auch unter erschwerten Bedingungen ermöglicht. Im allgemeinen haben die Waschwässer der ersten Stufe einer Rauchgaswäsche Gehalte an HCl von ungefähr 1-15 Gew.- %, vorzugsweise 3-10 Gew.-%. An Verunreinigungen enthalten die Waschwässer alles, was bei der Verbrennung gasförmig entstanden ist und sich in den (durch HCl) sauren Waschwässern löst, sowie Restanteile von Filterstaub, soweit dieser nicht an den Elektrofiltern abgeschieden worden ist. Das gleiche gilt auch von Aerosolresten, die sich im sauren Waschwasser lösen. In einem solchen sauren Waschwasser können z.B. vorhanden sein: Verbindungen von Arsen und Schwermetallen, wie Zink, Cadmium und Blei, insbesondere aber Quecksilberchloride oder auch metallisches Quecksilber, weiterhin Brom- und Jodverbindungen sowie Sulfate oder Sulfite

Überraschenderweise läßt sich aus solchen verunreinigten Waschwässern eine sehr reine azeotrope oder fast azeotrope Salzsäure gewinnen.

Gegenstand der Erfindung ist ein Verfahren zur Gewinnung von reiner, etwa 18 bis 20 %iger Salzsäure aus einer verunreinigten, 1-17 %igen Salzsäure, die durch Waschen oder Quenchen von HCl-haltigem Rauchgas mit Wasser erhalten wurde, dadurch gekennzeichnet, daß in einer ersten Stufe die verunreinigte Salzsäure durch Abdestillieren von Wasser in etwa 18-20 %ige Salzsäure überführt und diese in einer zweiten Stufe von den im Sumpf verbleibenden Verunreinigungen abdestilliert wird.

In der ersten Stufe wird das Waschwasser der Rauchgaswäsche soweit eingedampft, daß die HCl-Konzentration in der eingedampften Lösung einer azeotropen oder fast azeotropen Salzsäure entspricht, d.h. etwa 18-20 Gew.-% beträgt. Vorzugsweise dampft man soviel Wasser ab, daß eine azeotrope Salzsäure entsteht. Bei Gegenwart größerer Mengen an Arsen oder Bromiden oder Jodiden in Waschwasser ist es häufig zu empfehlen, dem Waschwasser ein Oxidationsmittel zuzusetzen, und zwar vor oder während des Eindampfens. Die Menge an eventuell zugesetztem Oxidationsmittel richtet sich nach dem Gehalt an Arsenverbindungen, Bromiden und Jodiden im Waschwasser, wobei ein Überschuß nicht schadet. Als Oxidationsmittel können z. B. Chlor (Einleiten von Chlorgas), Hypochlorite oder Wasserstoffperoxid verwendet werden. Beim Eindampfen gehen Brom und Jod in die Dampfphase über und damit letztlich in das Kondensat, aus dem sie gegebenenfalls zurückgewonnen werden können. Das eventuell zugesetzte Oxidationsmittel hat auch die Aufgabe, evtl. vorhandene Arsenverbindungen von der drei- in die fünfwertige Stufe zu überführen und damit das Abdestillieren von $AsCl_3$ zu verhindern. Bei der Verbrennung von Rückständen, die wenig Arsen enthalten, kann jedoch auf die Zugabe von Oxidationsmitteln verzichtet werden. Brom und Jod gehen dann zum größten Teil nicht mit dem Wasserdampf über und verbleiben in der folgenden zweiten Stufe im Destillationssumpf.

In der zweiten Stufe wird die in der ersten Stufe gewonnene Salzsäure überdestilliert, wobei es genügt, wenn ein Sumpf mit einem Volumen von nur 1 - 5 %, häufig sogar nur 1-2 % des Anfangsvolumens an Waschwasser zurückbleibt. Das so gewonnene Destillat hat eine HCl-Konzentration von etwa 18 bis 20 Gew.-% und ist sehr rein. Überraschenderweise liegen Verunreinigungen nur noch in so niedriger Konzentration vor, daß die Säure in dieser Hinsicht die Anforderungen des Deutschen Arzneibuches, 9. Ausgabe erfüllt.

Der Destillationssumpf, der praktisch die gesamten Verunreinigungen (außer Brom und Jod, falls ein Oxidationsmittel zugesetzt wird),insbesondere aber die Schwermetalle enthält, kann aufgearbeitet werden. Ein besonderer Vorteil des erfindungsgemäßen Verfahrens besteht darin, daß nur ein sehr geringes Volumen an Sumpf entsteht. Dieses beträgt, wie oben erwähnt, häufig weniger als 2 % des Ausgangsvolumens an Waschwasser, z.B. ca. 1,5 %, wenn das zu verarbeitende Waschwasser einen Gehalt an HCl von 5 % hat. Der Destillationssumpf kann mit Kalk oder Natronlauge auf pH 9 bis 10 gebracht werden, um eine Hydroxidfällung durchzuführen; die Schwermetallhydroxide können durch Filtration abgetrennt werden. Auch eine Fällung der Schwermetalle mit 1,3,5-Triazin-2,4,6-trithiol (TMT) kann sinnvoll sein, wenn nämlich ein Teil der Schwermetalle komplex gebunden sein sollte. Es ist aber auch möglich, den neutralisierten Sumpf, der ja nur ein relativ kleines Volumen hat, einzudampfen. In beiden Fällen gehen die festen Rückstände entweder in eine Deponie oder werden der Metallrückgewinnung zugeführt.

Man kann auch aus dem noch nicht neutralisierten Sumpf das Quecksilber, das als Chlorokomplex vorliegt, mittels eines stark basischen Ionenaustauschers entfernen. Dieser nicht regenerierbare Austauscher wird nach der Beladung mit Quecksilber deponiert. Der nunmehr quecksilberfreie Sumpf kann ebenfalls deponiert werden.

**Beispiel 1**

In einer Anlage zur Verbrennung von Rückständen aus verschiedenen Produktionsbetrieben eines Chemiewerkes entstand Rauchgas, das nach Filtration in einer ersten Waschstufe mit Wasser gewaschen wurde. Das anschließend aufzuarbeitende saure Waschwasser (Zusammensetzung siehe Tabelle 1) enthielt ca. 5 Gew.-% HCl. 7 kg dieses Waschwassers wurden in einen beheizbaren 10 1-Rundkolben gegeben, auf dem eine Füllkörperkolonne (35 x 3,5 cm) mit Raschigringen angebracht war. Der Inhalt des Kolbens wurde auf 100 - 108° C erhitzt, wobei Wasser abdestillierte. Die Destillationsgeschwindigkeit betrug 750 g/h. Nach Abdestillieren von 5061 g eines praktisch salzsäurefreien Destillates verblieben im Kolben 1933 g Rohsalzsäure. In einer zweiten Destillation wurde die Rohsalzsäure aus einem 2 l-Kolben über die schon beschriebene Füllkörperkolonne destilliert (280 g/h). Es gingen 1838 g einer reinen Salzsäure über, und 95 g Sumpf blieben zurück (Zusammensetzung siehe Tabelle 1).

Tabelle 1:

| Komponente | Waschwasser aus Rauchgaswäsche | Destillat der 1. Stufe | Destilla der 2. Stufe | Rückstand (Sumpf) der 2. Stufe |
|---|---|---|---|---|
| HCl | 5,3 Gew.-% | 0 | 19,1 Gew.-% | 16,6 Gew.-% |
| Verunreinigungen (mg/kg): | | | | |
| Fluor | 9 | 2,5 | 16 | 120 |
| Brom | 500 | 100 | 2 | 32000 |
| Jod | <10 | | 0 | <100 |
| Sulfat ($SO_4''$) | 590 | | <1 | nicht bestimmt |
| Arsen | 8 | < 0,005 | 16 | 300 |
| Cadmium | 0,03 | | <0,005 | <10 |
| Chrom | 0,5 | | <0,005 | 30 |
| Kupfer | 0,7 | | <0,005 | 30 |
| Eisen | 14,6 | | 0,04 | 900 |
| Quecksilber | 0,02 | 0,003 | 0,003 | 0,87 |
| Nickel | 1,6 | | <0,005 | 60 |
| Blei | 0,8 | | <0,01 | 45 |
| Zink | 24 | | 0,03 | 1400 |

## Beispiel 2

2 kg des im Beispiel 1 beschriebenen Waschwassers einer Rauchgaswäsche wurden in einen beheizbaren 4 l-Rundkolben gegeben, auf dem eine Füllkörperkolonne (35 x 3,5 cm) mit Raschigringen angebracht war. Der Inhalt des Kolbens wurde auf 100 - 108 °C erhitzt. Nach Erreichen der Siedetemperatur wurde während der gesamten Destillationszeit kontinuierlich Natriumhypochlorit-Lösung (mit 20 g Aktivchlor/l) zudosiert. In 200 min wurden 1446 g Vorlauf abdestilliert, der praktisch das gesamte Brom enthielt. Der Verbrauch an Natriumhypochlorit (berechnet als Aktivchlor) betrug 740 mg. Im Kolben verblieben 580 g Rohsalzsäure. In einer zweiten Destillation wurde die Rohsalzsäure aus einem 1 l-Kolben über die schon beschriebene Füllkörperkolonne destilliert (240 g/h). Es gingen 546 g einer reinen Salzsäure über, und 34 g Sumpf blieben zurück. Die Zusammensetzung der Destillate und des Sumpfes zeigt Tabelle 2.

EP 0 424 669 A2

Tabelle 2

| Komponente | Waschwasser aus Rauchgaswäsche | Destillat der 1. Stufe | Destillat der 2. Stufe | Sumpf der 2. Stufe |
|---|---|---|---|---|
| HCl | 5,3 Gew.-% | | 18,3 Gew.-% | 15 Gew.-% |
| Verunreinigungen (mg/kg): | | | | |
| Fluor | 9 | 2,4 | 17 | 120 |
| Brom | 500 | 590 | <2 | <200 |
| Jod | <10 | 0 | 0 | <100 |
| Arsen | 8 | <0,005 | 1,6 | |
| Cadmium | 0,03 | | <0,005 | |
| Chrom | 0,5 | | <0,005 | |
| Kupfer | 0,7 | | <0,005 | |
| Eisen | 14,6 | | 0,04 | |
| Quecksilber | 0,02 | 0,003 | 0,003 | 0,9 |
| Nickel | 1,6 | | <0,005 | |
| Blei | 0,8 | | <0,01 | |
| Zink | 24 | | 0,03 | |

**Ansprüche**

1. Verfahren zur Gewinnung von reiner, etwa 18 bis 20 %iger Salzsäure aus einer verunreinigten, 1-17 %igen Salzsäure, die durch Waschen oder Quenchen von HCl-haltigem Rauchgas mit Wasser erhalten wurde, dadurch gekennzeichnet, daß in einer ersten Stufe die verunreinigte Salzsäure durch Abdestillieren von Wasser in etwa 18 - 20 %ige Salzsäure überführt und diese in einer zweiten Stufe von den im Sumpf verbleibenden Verunreinigungen abdestilliert wird.

2. Verfahren nach Anspruch 1, dadurch gekennzeichnet, daß vor oder während der ersten Stufe ein Oxidationsmittel zugegeben wird.

3. Verfahren nach Anspruch 2, dadurch gekennzeichnet, daß das Oxidationsmittel Chlor oder Hypochlorit ist.

5